# EUROPÄISCHE PATENTSCHRIFT

(11) **EP 3 926 184 B1**
(45) Veröffentlichungstag und Bekanntmachung des Hinweises auf die Patenterteilung: **01.05.2024**
(21) Anmeldenummer: 20179931.9
(22) Anmeldetag: 15.06.2020
(51) Int. Cl.: F16B 37/06

(54) **BLINDNIETELEMENT, INSBESONDERE ZUR HERSTELLUNG EINER SCHRAUBVERBINDUNG IN EINEM BAUTEIL**
BLIND RIVET ELEMENT, IN PARTICULAR FOR PRODUCING A SCREW CONNECTION IN A COMPONENT
ÉLÉMENT RIVET AVEUGLE, EN PARTICULIER POUR LA FABRICATION D'UN RACCORDEMENT À VIS DANS UN COMPOSANT

(43) Veröffentlichungstag der Anmeldung: 22.12.2021
(73) Patentinhaber: BBA S.r.l., 63076 Centobuchi di Monteprandone (AP) (IT)
(72) Erfinder: HANRATTY, Paul, Southampton SO31 9BQ (GB)
(74) Vertreter: Franke, Markus

(56) Entgegenhaltungen:
- EP-A1- 0 077 858
- EP-A1- 0 158 304
- EP-A1- 1 277 970
- EP-A1- 1 625 309
- EP-A1- 2 308 612
- CN-A- 104 314 958

## Beschreibung

Die vorliegende Erfindung betrifft ein Blindnietelement, insbesondere ein Blindnietelement zur Herstellung einer Schraubverbindung in einem Bauteil.

Blindnietelemente haben sich für Befestigungsaufgaben bewährt, bei denen eine Schraubverbindung im Bereich dünnwandiger Materialien, beispielsweise Blechen, erforderlich ist, in die normalerweise kein Gewinde geschnitten werden kann. Ein Blindnietelement ist beispielsweise aus der EP 1 918 596 A1 bekannt.

Problematisch bei derartigen Blindnietelementen bzw. von mittels derartiger Blindnietelemente hergestellter Schraubverbindung ist, dass die Blindnietelemente bzw. die Schraubverbindungen keine ausreichende Verdrehsicherheit aufweisen, sodass bei einem beabsichtigten Anziehen der Schraubverbindung bzw. bei einem beabsichtigten Lösen der Schraubverbindung es dazu kommt, dass sich das Blindnietelement gegenüber dem Bauteil, in das das Blindnietelement eingebracht ist, verdreht. Dies birgt die Gefahr, dass die Schraubverbindung nicht ausreichend fest angezogen werden kann oder ein Lösen der Schraubverbindung nicht möglich ist. Ferner kann es zu einer Beschädigung des Bauteils oder umliegender Bauteile beim Drehen des Blindnietelements kommen.

Die EP 2 308 612 A1 offenbart ein Blindnietelement, dass die Merkmale des Oberbegriffs des Patentanspruchs 1 aufweist.

Die CN 104 314 958 A zeigt weiteren Stand der Technik.

Aufgabe der vorliegenden Erfindung ist es, ein Blindnietelement, das die Merkmale des Oberbegriffs des Patentanspruchs 1 aufweist, dahingehend weiterzubilden, dass dieses eine besonders hohe Verdrehsicherheit gewährleistet und zudem dazu geeignet ist, eine Oberfläche des Bauteils, mit dem das Blindnietelement verbunden wird, zu durchdringen, insbesondere eine auf dem Bauteil aufgebrachte Beschichtung, wie beispielsweise eine Kunststoffbeschichtung oder eine Lackschicht, zu durchdringen, insbesondere um einen elektrischen Kontakt zwischen dem Blindnietelement und dem Bauteil herzustellen.

Diese Aufgabe wird durch ein Blindnietelement, das die Merkmale des Patentanspruchs 1 aufweist, gelöst. Das erfindungsgemäße Blindnietelement weist einen Kopfabschnitt und einen in einer axialen Richtung an den Kopfabschnitt angrenzenden Schaft auf. Vorzugsweise weist der Kopfabschnitt einen größeren Durchmesser auf als der Schaft. Der Schaft weist ein Innengewinde oder einen Verbindungsabschnitt für einen Gewindebolzen und zwischen dem Innengewinde bzw. dem Verbindungsabschnitt für den Gewindebolzen und den Kopfabschnitt einen Verformungsabschnitt auf. Der Verformungsabschnitt dient der Ausbildung eines Schließkopfes bei einem Verformen des Verformungsabschnitts. Der Kopfabschnitt weist einen radial äußeren Bereich auf, wobei der radial äußere Bereich in einer radialen Richtung beabstandet vom Schaft ausgebildet ist. Der Kopfabschnitt weist zumindest einen in der axialen Richtung hervorstehenden ersten Vorsprung auf, wobei der zumindest eine erste Vorsprung ausschließlich in dem radial äußeren Bereich des Kopfabschnitts ausgebildet ist, und/oder der Kopfabschnitt weist zumindest einen entgegen der axialen Richtung hervorstehenden zweiten Vorsprung auf, wobei der zumindest eine zweite Vorsprung ausschließlich in dem radial äußeren Bereich des Kopfabschnitts ausgebildet ist.

Die Ausbildung des ersten Vorsprungs bzw. des zweiten Vorsprungs in dem radial äußeren Bereich hat den Vorteil, dass auf das Blindnietelement einwirkende Torsionskräfte besonders gut von dem Blindnietelement in das von den Vorsprüngen kontaktierte Bauteil eingeleitet werden, sodass das Blindnietelement eine besonders hohe Verdrehsicherheit aufweist.

Ferner erweist sich eine Ausbildung der Vorsprünge in dem radial äußeren Bereich dahingehend als Vorteil, dass Toleranzen der Durchgangsöffnung, in die das Blindnietelement eingeführt und anschließend gesetzt wird, sowie Toleranzen beim Setzen des Blindnietelements nur einen geringen Einfluss auf das ordnungsgemäße Eindringen der Vorsprünge in das jeweilige Bauteil haben, da die Vorsprünge ausreichend beabstandet von dem Setzloch/der Durchgangsöffnung angeordnet sind. Im Gegensatz dazu besteht bei Vorsprüngen im radial inneren Bereich die Gefahr, dass diese teilweise nicht in das entsprechende Bauteil eindringen, sondern die Vorsprünge nach dem Setzen des Blindnietelements zumindest teilweise in der Durchgangsöffnung/dem Setzloch angeordnet sind und somit nicht oder nur gering zur Verdrehsicherheit des Blindnietelements beitragen können. Ferner besteht bei Vorsprüngen im radial inneren Bereich eine erhöhte Gefahr dafür, dass es beim Einbringen des Blindnietelements in das Setzloch zu einem Verkippen des Blindnietelements kommt, somit die Axialrichtung des Blindnietelements und die Axialrichtung des Setzlochs zueinander verkippt sind, was sich nachteilhaft auf die mittels des Blindnietelements gebildete Schraubverbindung auswirkt, die in diesem Fall nicht die gewünschte Winkelausrichtung aufweist.

Insbesondere bei Vorliegen von entgegen der axialen Richtung hervorstehenden Vorsprüngen, somit Vorsprüngen, die auf der dem Schaft abgewandten Seite des Kopfabschnitts ausgebildet sind, hat die Ausbildung dieser Vorsprünge in dem radial äußeren Bereich den Vorteil, dass die Vorsprünge außerhalb eines Bereichs angeordnet sind, der typischerweise von dem verwendeten Setzwerkzeug beim Setzen des Blindnietelements kontaktiert wird. Somit Behinderung des Setzens des Blindnietelements vermieden. Auch eine ungewollte Verformung der Vorsprünge beim Setzvorgang wird vermieden.

Das Blindnietelement kann als Blindnietmutter ausgebildet sein, insofern als Blindnietelement mit einem Innengewinde im Bereich des Schafts ausgebildet sein. Das Verbinden eines Befestigungsmittels, das ein Blindnietelement in Form einer Blindnietmutter aufweist, insofern ein Blindnietelement mit einem Innengewinde aufweist, mit einem Bauteil kann so erfolgen, dass das Befestigungsmittel mit zunächst in einem vorgefertigten Loch bzw. in einer vorgefertigten Aufnahmeöffnung des Bauteils platziert wird und dann mit einem geeigneten Werkzeug, das typischerweise einen rotierbaren und axial verschiebbaren Gewindedorn aufweist, vernietet wird. Hierzu wird der Gewindedorn von der Kopfabschnittseite her in das Innengewinde der Blindnietmutter geschraubt und dann axial so verschoben, dass eine Stauchung des Verformungsabschnitts erfolgt und sich somit zwischen dem Gewindeanfang und der Unterseite des Bauteils ein Gegenflansch, also ein Schließkopf, bildet. Der Schließkopf verankert zusammen mit dem Kopfabschnitt der Blindnietmutter, der auf der Oberseite des Bauteils angeordnet ist, die Blindnietmutter und somit das Befestigungsmittel in dem Bauteil. Anschließend wird der Gewindedorn ausgeschraubt. Die Blindnietmutter steht dann als Aufnahme für eine Befestigungsschraube zur Verfügung. Ist das Blindnietelement als Blindnietgewindebolzen ausgebildet, weist der Schaft eine Aufnahme für einen Gewindebolzen auf, der in aller Regel mit der Aufnahme verschweißt oder verpresst ist. Das Verbinden des Befestigungsmittels mit einem Blindnietgewindebolzen erfolgt entsprechend dem Verbinden des Befestigungsmittels mit Blindnietmutter, mit dem Unterschied, dass unmittelbar am Gewindebolzen gezogen wird.

Durch den zumindest einen ersten Vorsprung und/oder den zumindest einen zweiten Vorsprung ist die Ausbildung eines elektrischen Kontakts zwischen dem Blindnietelement und dem von dem jeweiligen Vorsprung kontaktierten Bauteil begünstigt, da der entsprechende Vorsprung besonders gut dazu geeignet ist, eine Beschichtung, bspw. eine Kunststoffbeschichtung oder eine Lackschicht, die auf ein elektrisch leitfähiges Material des Bauteils aufgebracht ist, zu durchdringen, und somit das elektrisch leitfähige Material des Bauteils unmittelbar zu kontaktieren.

Vorzugsweise weist das Blindnietelement ein elektrisch leitfähiges Material auf oder besteht aus einem elektrisch leitfähigen Material, bspw. einem Metall oder einer Metalllegierung.

Es ist durchaus denkbar, dass der zumindest eine erste Vorsprung und/oder der zumindest eine zweite Vorsprung als umlaufender Vorsprung ausgebildet ist.

Vorzugsweise weist das Blindnietelement mehrere erste Vorsprünge und/oder mehrere zweite Vorsprünge auf.

Die mehreren ersten Vorsprünge und/oder die mehreren zweiten Vorsprünge sind insbesondere tangential beabstandet und/oder vorzugsweise umlaufend angeordnet. Dabei wird es als besonders vorteilhaft angesehen, wenn die mehreren ersten Vorsprünge und/oder die mehreren zweiten Vorsprünge rotationssymmetrisch angeordnet sind, wobei die Zähligkeit größer 1 beträgt. Als besonders vorteilhaft wird es in diesem Zusammenhang angesehen, wenn die Zähligkeit identisch ist mit der Anzahl der ersten Vorsprünge bzw. der Anzahl der zweiten Vorsprünge.

Vorzugsweise sind die mehreren ersten Vorsprünge und/oder mehreren zweiten Vorsprünge entlang eines Kreisrings angeordnet.

In einer besonders bevorzugten Ausführungsform ist ein radial innerer Bereich des Kopfabschnitts frei von Vorsprüngen.

Hinsichtlich einer besonders hohen Verdrehsicherheit hat es sich als vorteilhaft erwiesen, wenn ein radialer Abstand zwischen dem jeweiligen ersten bzw. zweiten Vorsprung und dem Schaft zumindest 50 % eines radialen Abstands einer Außenkante des Kopfabschnitts und des Schafts beträgt. Vorzugsweise beträgt das vorgenannte Verhältnis zumindest 60 %, insbesondere zumindest 75 %.

Als besonders vorteilhaft wird es angesehen, wenn der zumindest eine erste Vorsprung und/oder der zumindest eine zweite Vorsprung an der Außenkante des Kopfabschnitts ausgebildet ist.

Erfindungsgemäß ist das Blindnietelement derart ausgebildet, dass in einer Projektion in der axialen Richtung der Kopfabschnitt angrenzend an den zumindest einen ersten Vorsprung eine Aussparung aufweist und/oder angrenzend an den zumindest einen zweiten Vorsprung eine Aussparung aufweist. Somit ist tangential angrenzend an den ersten Vorsprung bzw. den zweiten Vorsprung ein Freiraum gebildet. Eine derartige Gestaltung hat sich hinsichtlich einer besonders hohen Verdrehsicherheit als vorteilhaft erwiesen. Dieser Freiraum kann insbesondere dazu dienen, beim Setzen des Blindnietelements aufgrund des Eindringens des ersten Vorsprungs verdrängtes Material des Bauteils, in das das Blindnietelement eingebracht wird bzw. des Bauteils, das beim Verbinden der Bauteile mit dem Kopfabschnitt auf der Seite, die dem Schaft abgewandt ist, in Kontakt kommt, aufzunehmen. Dadurch wird ein tieferes Eindringen des jeweiligen Vorsprungs in das jeweilige Bauteil ermöglicht. Da der Freiraum zudem durch verdrängtes Material aufgefüllt wird, wird die Verdrehsicherheit zusätzlich erhöht.

Im Zusammenhang mit der Aussparung wird es als vorteilhaft angesehen, wenn in einer Blickrichtung in der axialen Richtung die jeweilige Aussparung im Uhrzeigersinn an den zumindest einen ersten Vorsprung angrenzt und/oder die jeweilige Aussparung in einer Blickrichtung in der axialen Richtung im Uhrzeigersinn an den zumindest einen zweiten Vorsprung angrenzt.

Diese symmetrische Gestaltung hat sich als besonders vorteilhaft hinsichtlich der Verdrehsicherheit erwiesen.

Ferner wird es als vorteilhaft angesehen, wenn in einer Blickrichtung in der axialen Richtung entgegen dem Uhrzeigersinn angrenzend an den zumindest einen ersten Vorsprung der Kopfabschnitt frei von einer Aussparung ist und/oder in einer Blickrichtung in der axialen Richtung entgegen dem Uhrzeigersinn angrenzend an den zumindest einen zweiten Vorsprung der Kopfabschnitt frei von einer Aussparung ist. Bei einer derartigen Gestaltung ist der Vorsprung besonders gut zur Aufnahme von Torsionskräften geeignet, da sich der Vorsprung in der tangentialen Richtung an dem übrigen Kopfabschnitt abstützen kann bzw. der Kopfabschnitt besonders gut tangential auf den Vorsprung einwirkende Kräfte aufnehmen kann.

In einer weiteren Ausführungsform des Blindnietelements ist vorgesehen, dass in einer Blickrichtung in der axialen Richtung die jeweilige Aussparung entgegen dem Uhrzeigersinn an dem zumindest einen ersten Vorsprung angrenzt und/oder die jeweilige Aussparung in einer Blickrichtung in der axialen Richtung entgegen dem Uhrzeigersinn an den zumindest einen zweiten Vorsprung angrenzt. Hinsichtlich der Vorteile wird auf die obigen Ausführungen verwiesen.

Bei dieser Ausführungsform wird es als besonders vorteilhaft angesehen, wenn in einer Blickrichtung in der axialen Richtung im Uhrzeigersinn angrenzend an den zumindest einen ersten Vorsprung der Kopfabschnitt frei von einer Aussparung ist und/oder in einer Blickrichtung in der axialen Richtung im Uhrzeigersinn angrenzend an den zumindest einen zweiten Vorsprung der Kopfabschnitt frei von einer Aussparung ist. Hinsichtlich der Vorteile wird auf die obigen Ausführungen verwiesen.

Vorzugsweise ist der zumindest eine erste Vorsprung und/oder der zumindest eine zweite Vorsprung durch eine lokale Umformung eines Bereichs des Kopfabschnitts gebildet, beispielsweise mittels Prägens oder Umbiegens eines Teilbereichs des Kopfabschnitts.

In Hinblick auf ein besonders gutes und einfaches Eindringen des ersten Vorsprungs bzw. des zweiten Vorsprungs in das jeweilige Bauteil hat es sich als vorteilhaft erwiesen, wenn der zumindest eine erste Vorsprung und/oder der zumindest eine zweite Vorsprung eine Schneidkante und/oder eine Spitze aufweist. Vorzugsweise ist die Schneidkante oder die Spitze am freien Ende des Vorsprungs ausgebildet.

Als besonders vorteilhaft hat es sich erwiesen, wenn die Schneidkante sich im Wesentlichen in radialer Richtung erstreckt. Unter im Wesentlichen wird vorliegend verstanden, dass die Schneidkante in einem Winkel zwischen 0° und 10° zur radialen Richtung ausgerichtet ist.

In einer vorteilhaften Weiterbildung ist vorgesehen, dass der zumindest eine erste Vorsprung und/oder der zumindest eine zweite Vorsprung eine erste Schneidfläche und eine zu der ersten Schneidfläche geneigte zweite Schneidfläche aufweist, wobei eine Kontaktlinie der Schneidflächen die Schneidkante des jeweiligen Vorsprungs bildet. Bevorzugt beträgt ein von den Schneidflächen eingeschlossener Winkel zwischen 80° und 120°.

Das Blindnietelement ist vorzugsweise einteilig ausgebildet.

Das Blindnietelement besteht vorzugsweise aus einem Metall oder einer Metalllegierung.

Als besonders vorteilhaft hat es sich erwiesen, wenn die erste Schneidfläche mit einer senkrecht zu der axialen Richtung ausgebildeten Ebene einen ersten Winkel einschließt und die zweite Schneidfläche mit dieser Ebene einen zweiten Winkel einschließt, wobei der Betrag des zweiten Winkels kleiner ist als der Betrag des ersten Winkels. Vorzugsweise betragen der erste Winkel und/oder der zweite Winkel weniger als 90°. Vorzugsweise ist die zweite Schneidfläche der Aussparung zugewandt. Beim Anziehen der mittels des Blindnietelements gebildeten Schraubverbindung und beim Lösen der mittels des Blindnietelements gebildeten Schraubverbindung werden somit im Wesentlichen Flächen mit einer unterschiedlichen Neigung belastet. Das Blindnietelement ist insofern asymmetrisch ausgebildet. Diese asymmetrische Gestaltung hat sich als besonders vorteilhaft erwiesen. Bei einer derartigen Gestaltung sind die typischerweise die maximalen Drehmomente, die das Blindnietelement beim Anziehen der Schraubverbindung und beim Lösen der Schraubverbindung aufnehmen kann, unterschiedlich. Dadurch kann beispielsweise sichergestellt werden, dass eine gebildete Schraubverbindung auch wieder gelöst werden kann, indem das Blindnietelement derart gestaltet ist, dass das maximale Drehmoment, das das Blindnietelement beim Anziehen der Schraubverbindung aufnehmen kann, geringer ist, als das maximale Drehmoment, das das Blindnietelement beim Lösen der Schraubverbindung aufnehmen kann.

Als besonders vorteilhaft wird es angesehen, wenn das Blindnietelement mehrere erste Vorsprünge und/oder mehrere zweite Vorsprünge aufweist, wobei eine Gesamtheit der mehreren ersten Vorsprünge und/oder eine Gesamtheit der mehreren zweiten Vorsprünge um eine in axialer Richtung ausgebildete Achse umlaufend ausgebildet sind, vorzugsweise das Blindnietelement mehrere erste Vorsprünge und mehrere zweite Vorsprünge aufweist, wobei die mehreren ersten Vorsprünge und die mehreren zweiten Vorsprünge in Umlaufrichtung alternierend ausgebildet sind.

Vorzugsweise weist das Blindnietelement zumindest drei erste Vorsprünge und drei zweite Vorsprünge, bevorzugt zumindest vier erste Vorsprünge und zumindest vier zweite Vorsprünge auf.

Als besonders vorteilhaft wird es angesehen, wenn der Kopfabschnitt im Bereich des ersten Vorsprungs und/oder im Bereich des zweiten Vorsprungs eine größere Erstreckung in der axialen Richtung aufweist als in angrenzenden Bereichen des Kopfabschnitts. Insofern ist der Kopfabschnitt im Bereich des jeweiligen Vorsprungs in seiner Stärke erhöht, wodurch vermieden wird, dass bei einer axialen Belastung der Vorsprünge diese in axialer Richtung verformt, insbesondere zusammengedrückt, werden.

Der Kopfabschnitt kann einen ovalen, insbesondere einen kreisrunden, Querschnitt aufweisen. Der Kopfabschnitt kann aber auch einen eckigen, insbesondere einen viereckigen oder sechseckigen, Querschnitt aufweisen. Der Kopfabschnitt kann einen halbhexagonalen oder hexagonalen Querschnitt aufweisen. Der Kopfabschnitt kann, insbesondere in seinem radial äußeren Bereich, in der axialen Richtung dick oder dünn ausgebildet sein. Der Kopfabschnitt ist vorzugsweise als Senkkopf ausgebildet.

Der Schaft oder zumindest ein Teil des Schafts kann einen ovalen, insbesondere kreisrunden, Querschnitt aufweisen. Der Schaft oder zumindest ein Teil des Schafts kann aber auch einen eckigen, insbesondere einen viereckigen oder sechseckigen, Querschnitt aufweisen. Der Schaft oder zumindest ein Teil des Schafts kann insbesondere einen halbhexagonalen oder hexagonalen Querschnitt aufweisen.

Der Schaft und/oder der Kopfabschnitt weisen vorzugsweise eine Rändelung auf, insbesondere weisen der Schaft und/oder der Kopfabschnitt radial außen eine Rändelung auf.

In den nachfolgenden Figuren wird die Erfindung anhand von Ausführungsbeispielen näher erläutert, ohne auf diese beschränkt zu sein.

Es zeigen:
- Fig. 1: eine erste Ausführungsform des Blindnietelements in einer Ansicht gemäß dem Pfeil I in Fig. 2,
- Fig. 2: das Blindnietelement in einer Ansicht gemäß dem Pfeil II in Fig. 1,
- Fig. 3: das Blindnietelement in einer teilgeschnittenen Darstellung gemäß der Linie III-III in Fig. 2,
- Fig. 4: einen Teilbereich des Blindnietelements gemäß dem Kreis IV in Fig. 3,
- Fig. 5: das Blindnietelement gemäß dem Pfeil V in Fig. 3,
- Fig. 6: eine weitere Ausführungsform des Blindnietelements in einer Seitenansicht,
- Fig. 7: ein Teilbereich des Blindnietelements gemäß Fig. 6,
- Fig. 8: eine weitere Ausführungsform des Blindnietelements in einer Seitenansicht,
- Fig. 9: ein Blindnietelement, das nicht vom Schutzbereich der Patentansprüche umfasst ist, in einer Seitenansicht,
- Fig. 10: das Blindnietelement gemäß Fig. 9 in einer teilgeschnittenen Darstellung,
- Fig. 11: eine weitere Ausführungsform des Blindnietelements in einem Zustand nach einem Verformen eines Verformungsabschnitts,
- Fig. 12: ein weiteres Blindnietelement, das nicht vom Schutzbereich der Patentansprüche umfasst ist, in einer Seitenansicht,
- Fig. 13: das Blindnietelement gemäß Fig. 12 in einer Schnittansicht.

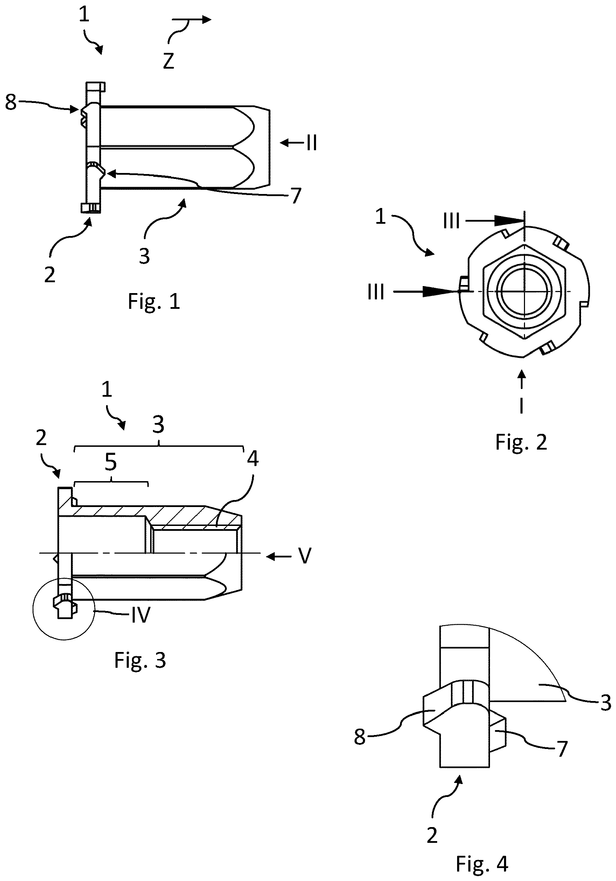

Die Fig. 1 bis 5 zeigen eine erste Ausführungsform des Blindnietelements 1. Das Blindnietelement 1 weist einen Kopfabschnitt 2 und einen in einer axialen Richtung Z an den Kopfabschnitt 2 angrenzenden Schaft 3 auf. Der Schaft 3 ist vorliegend als Teilsechskant ausgebildet, wobei der Schaft 3 an seinem dem Kopfabschnitt 2 abgewandten Ende einen sich in der axialen Richtung Z verjüngenden Querschnitt aufweist. Dadurch wird das Einführen des Blindnietelements 1 mit dem Schaft 3 vorlaufend in ein Setzloch erleichtert.

Der Schaft 3 weist ein Innengewinde 4 und zwischen dem Innengewinde 4 und dem Kopfabschnitt 2 einen Verformungsabschnitt 5 auf, wobei der Verformungsabschnitt 5 vorliegend durch eine Materialschwächung gebildet ist, nämlich eine geringere Wanddicke des Schafts 3 im Bereich des Verformungsabschnitts 5. Dies ist insbesondere der Fig. 3 zu entnehmen. Der Verformungsabschnitt 5 dient zur Ausbildung eines Schließkopfes 6 bei einem Verformen des Verformungsabschnitts 5. Das Verbinden des Blindnietelements 1 mit einem weiteren Bauteil erfolgt typischerweise derart, dass das Blindnietelement 1 zunächst in einem vorgefertigten Loch bzw. in einer vorgefertigten Aufnahmeöffnung des Bauteils platziert wird und im Anschluss daran mit einem geeigneten Werkzeug in dem Bauteil vernietet wird, indem das Blindnietelement 1 im Bereich des Verformungsabschnitts 5 derart verformt wird, dass sich auf der dem Kopfabschnitt 2 abgewandten Seite des Bauteils der Schließkopf 6 ausbildet. Das verwendete Werkzeug weist typischerweise einen rotierbaren und axial verschiebbaren Gewindedorn auf. Der Gewindedorn wird von der Kopfabschnittsseite her in das Innengewinde 4 des als Blindnietmutter ausgebildeten Blindnietelements 1 geschraubt und dann axial so verschoben, dass eine Stauchung des Verformungsabschnitts 5 erfolgt und sich somit zwischen den Gewindeanfang des Innengewindes 4 und der Unterseite des Bauteils ein Gegenflansch in Form des Schließkopfes 6 ausbildet. Der Schließkopf 6 verankert zusammen mit dem Kopfabschnitt 2, der auf der Oberseite des Bauteils angeordnet ist, das Blindnietelement 1 in dem Bauteil. Anschließend wird der Gewindedorn des Setzwerkzeugs ausgeschraubt. Das Innengewinde 4 des Blindnietelements 1 steht dann als Aufnahme für ein Befestigungsmittel, beispielsweise eine Schraube, zur Verfügung.

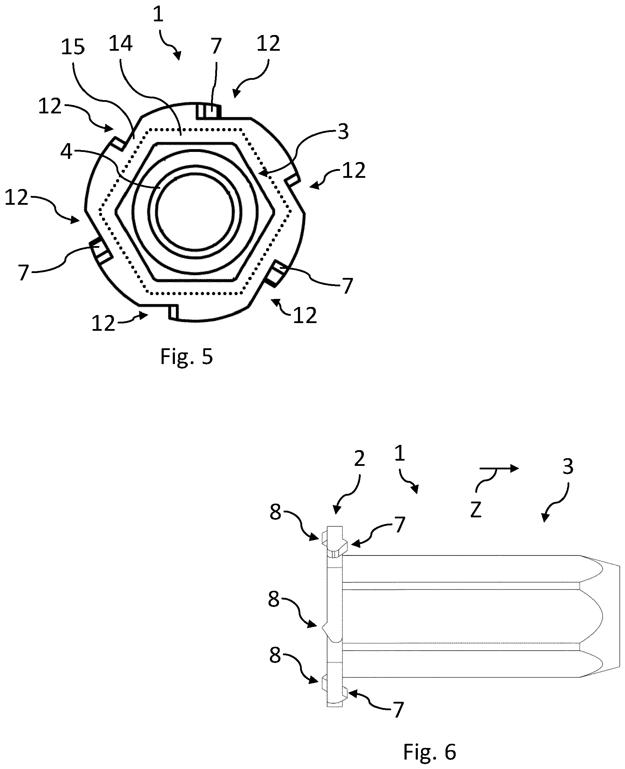

Der Kopfabschnitt 2 des Blindnietelements 1 weist radial äußeren Bereich 15 auf, wobei der radial äußere Bereich 15 in einer radialen Richtung beabstandet vom Schaft 3 ausgebildet ist. Ein radial innerer Bereich 16 des Kopfabschnitts 2 ist zwischen dem radial äußeren Bereich 15 und dem Schaft 3 des Blindnietelements 1 ausgebildet. Der radial äußere Bereich 15 und der radial innere Bereich 14 sind in der Fig. 5 durch eine punktierte Linie kenntlich gemacht, die den inneren Bereich 14 vom äußeren Bereich 15 abgrenzt.

Der Kopfabschnitt 2 weist drei in der axialen Richtung Z hervorstehende erste Vorsprünge 7 auf und drei entgegen der axialen Richtung Z hervorstehende zweite Vorsprünge 8 auf, wobei die ersten Vorsprünge 7 und die zweiten Vorsprünge 8 ausschließlich in dem radial äußeren Bereich 15 des Kopfabschnitts 2 ausgebildet sind. Der radial innere Bereich 16 des Kopfabschnitts 2 hingegen ist frei von Vorsprüngen.

Die ersten Vorsprünge 7 und die zweiten Vorsprünge 8 sind vorliegend an der Außenkante des Kopfabschnitts 2 ausgebildet. Ein radialer Abstand zwischen dem jeweiligen Vorsprung 7, 8 und dem Schaft 3 beträgt zumindest 60 % eines radialen Abstands der Außenkante des Kopfabschnitts 2 und des Schafts 3.

Die ersten und zweiten Vorsprünge 7, 8 sind umlaufend um eine in axialer Richtung Z ausgebildete Achse des Blindnietelements 1 angeordnet, wobei die Anordnung vorliegend rotationssymmetrisch ist, wobei eine Zähligkeit n identisch ist mit der Anzahl der ersten bzw. zweiten Vorsprünge 7, 8, somit vorliegend die Zähligkeit n=3 beträgt.

In einer Projektion in der axialen Richtung Z weist der Kopfabschnitt 2 angrenzend an den jeweiligen ersten Vorsprung 7 und angrenzend an den jeweiligen zweiten Vorsprung 8 jeweils eine Aussparung 12 auf. Die jeweilige Aussparung 12 grenzt entgegen dem Uhrzeigersinn an den jeweiligen ersten Vorsprung 7 bzw. den jeweiligen zweiten Vorsprung 8 an. In der anderen Richtung, nämlich im Uhrzeigersinn, ist der Kopfabschnitt 2 angrenzend an den jeweiligen ersten Vorsprung 7 bzw. angrenzend an den jeweiligen zweiten Vorsprung 8 frei von einer Aussparung.

Die jeweilige Aussparung 12 hat den Vorteil, dass in diesem ausgesparten Bereich beim Einbringen des Blindnietelements 1 in ein Setzloch des Bauteils und/oder beim Verschrauben eines weiteren Bauteils mit diesem ersten Bauteil mittels des Blindnietelements 1 verdrängtes Material aufgenommen werden kann. Dadurch, dass der Kopfabschnitt 2 in der anderen Richtung frei von einer Aussparung ist, wird der jeweilige Vorsprung 7, 8 durch den nicht ausgesparten Teil des Kopfabschnitts 2 in der tangentialen Richtung abgestützt.

Wie sich insbesondere den Fig. 2 und 5 entnehmen lässt, ergibt sich durch diese Gestaltung des Kopfabschnitts bei einer Blickrichtung in der axialen Richtung Z eine sägeblattartige Außenkontur des Kopfabschnitts 2.

Vorliegend weisen der jeweilige erste Vorsprung 7 und der jeweilige zweite Vorsprung 8 eine vorstehende Schneidkante 9 auf, wobei sich die Schneidkante 9 im Wesentlichen in radialer Richtung erstreckt. Die Schneidkante 9 des jeweiligen Vorsprungs 7, 8 ist vorliegend dadurch gebildet, dass der jeweilige Vorsprung 7, 8 eine erste Schneidfläche 10 und eine zu der ersten Schneidfläche 10 geneigte zweite Schneidfläche 11 aufweist, wobei eine Kontaktlinie der Schneidflächen 10, 11 die Schneidkante 9 des jeweiligen Vorsprungs 7, 8 bildet.

Die erste Schneidfläche 10 schließt mit einer senkrecht zu der axialen Richtung Z ausgebildeten Ebene einen ersten Winkel α ein und die zweite Schneidfläche 11 schließt mit dieser Ebene einen zweiten Winkel β ein, wobei der Betrag des zweiten Winkels β kleiner ist als der Betrag des ersten Winkels α. Die zweite Schneidfläche 11 ist dabei der Aussparung 12 zugewandt. Der von den Schneidflächen eingeschlossene Winkel γ beträgt vorzugsweise zwischen 80° und 120°. Die Winkel α und β hingegen sind vorzugsweise jeweils kleiner als 90°.

Die drei ersten Vorsprünge 7 und die drei zweiten Vorsprünge 8 sind vorliegend in Umlaufrichtung alternierend ausgebildet. Somit folgt in Umlaufrichtung auf einen ersten Vorsprung 8 ein zweiter Vorsprung 7 und auf den zweiten Vorsprung 7 ein erster Vorsprung 8.

Der jeweilige erste Vorsprung 7 und der jeweilige zweite Vorsprung 8 sind vorliegen durch eine lokale Umformung eines Bereichs des Kopfabschnitts 4 gebildet, wobei vorliegend zur Bildung des jeweiligen Vorsprungs 8 ein Teilbereich des Kopfabschnitts 4 eingeschnitten und anschließend umgebogen wurde.

Wie insbesondere den Ansichten der Fig. 1, Fig. 3 und Fig. 4 zu entnehmen ist, weist der Kopfabschnitt 2 im Bereich des jeweiligen ersten Vorsprungs 7 und im Bereich des jeweiligen zweiten Vorsprungs 8 eine größere Erstreckung in der axialen Richtung Z auf als in angrenzenden Bereichen des Kopfabschnitts 4. Insofern ist der jeweilige Vorsprung 7, 8 derart ausgebildet, dass der Kopfabschnitt 2 in dem jeweiligen Bereich des Vorsprungs 7, 8 eine erhöhte Materialstärke aufweist. Dies hat den Vorteil, dass bei einem Einbringen des Blindnietelements 1 in das Bauteil bzw. bei einem Verbinden eines weiteren Bauteils mittels des Blindnietelements 1 der dem jeweiligen Vorsprung 7, 8 in Axialrichtung Z bzw. entgegen der Axialrichtung Z gegenüberliegende Bereich des Kopfabschnitts 2 ein Verformen des Vorsprungs 7, 8 in der axialen Richtung Z bzw. entgegen der axialen Richtung Z verhindert, insbesondere der gegenüberliegende Bereich des Kopfabschnitts 2 sich an den jeweils anderem Bauteil abstützt und auf diese Weise ein axiales Verformen des jeweiligen Vorsprungs 7, 8 verhindert.

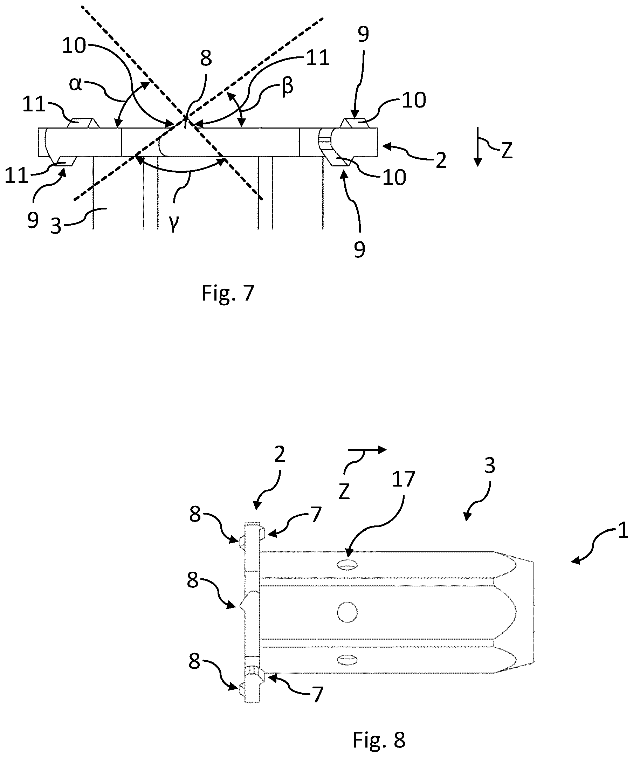

Die Fig. 6 und 7 zeigen eine zweite Ausführungsform des Blindnietelements 1, wobei sich diese zweite Ausführungsform von der ersten Ausführungsform im Wesentlichen durch die Länge des Schafts 3 unterscheidet.

Die in der Fig. 8 gezeigte dritte Ausführungsform unterscheidet sich von der zweiten Ausführungsform im Wesentlichen dadurch, dass das Blindnietelement 1 im Verformungsbereich 5 den Schaft 3 in der radialen Richtung durchdringende Löcher 17 aufweist, wobei die Löcher 17 umlaufend angeordnet sind und wobei eine ebene Fläche des als Teilsechskant ausgebildeten Schafts 3 jeweils ein Loch 17 aufweist.

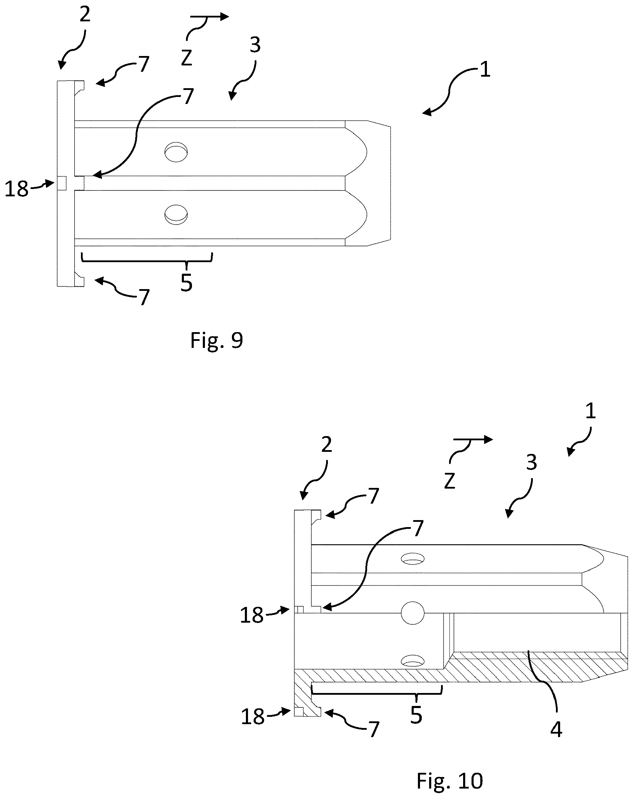

Das in den Fig. 9 und 10 dargestellte Blindnietelement 1, das nicht vom Schutzbereich der Patentansprüche umfasst ist, unterscheidet sich von der dritten Ausführungsform des Blindnietelements 1 im Wesentlichen durch die Gestaltung des Kopfabschnitts 2. Das in den Fig. 9 und 10 dargestellte Blindnietelement 1 weist lediglich erste Vorsprünge 7 und keine zweiten Vorsprünge 8 auf. Die ersten Vorsprünge 7 sind vorliegend durch ein Umformen des Kopfabschnitts 2 in der axialen Richtung Z gebildet, nämlich durch einen Prägevorgang. Dadurch weist der Kopfabschnitt 2 jeweils gegenüberliegend dem ersten Vorsprung 7 einen korrespondierenden Rücksprung 18 auf.

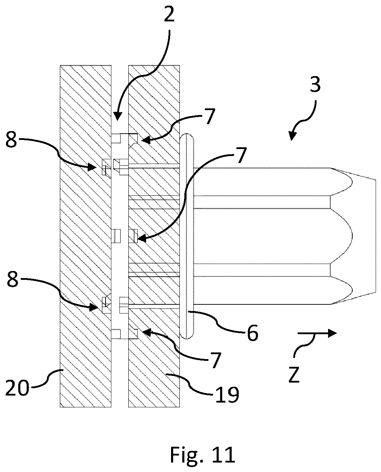

Die Fig. 11 zeigt eine weitere Ausführungsform des Blindnietelements 1 in einem in ein erstes Bauteil 19 gesetzten Zustand, somit in einem verformten Zustand des Verformungsabschnitts 5, wobei des Weiteren ein zweites Bauteil 20 mittels eines Befestigungsmittels 21, vorliegend einer Schraube, die in das Innengewinde 4 des Blindnietelements 1 eingeschraubt ist, verbunden ist. Wie der Fig. 11 zu entnehmen ist, ist der Kopfabschnitt 2 zwischen den beiden Bauteilen 19, 20 angeordnet, wobei aufgrund der Krafteinwirkung beim Setzen des Blindnietelements 1 und beim Anziehen des Befestigungsmittels 21 die Vorsprünge 7, 8 in das erste Bauteil 19 bzw. das zweite Bauteil 20 eindringen. Dadurch wird zum einen eine besonders hohe Verdrehsicherheit des Blindnietelements 1 erreicht und zum anderen eine etwaige Beschichtung des ersten Bauteils 19 bzw. des zweiten Bauteils 20 durchdrungen, beispielsweise um eine elektrische Verbindung zwischen dem Blindnietelement 1 und dem ersten Bauteil 10 bzw. dem zweiten Bauteil 20 und auf diese Weise zwischen den beiden Bauteilen 19, 20 zu erreichen. Bei der in der Fig. 11 dargestellten Ausführungsform sind die Vorsprünge 7, 8 wiederum durch ein axiales Prägen gebildet.

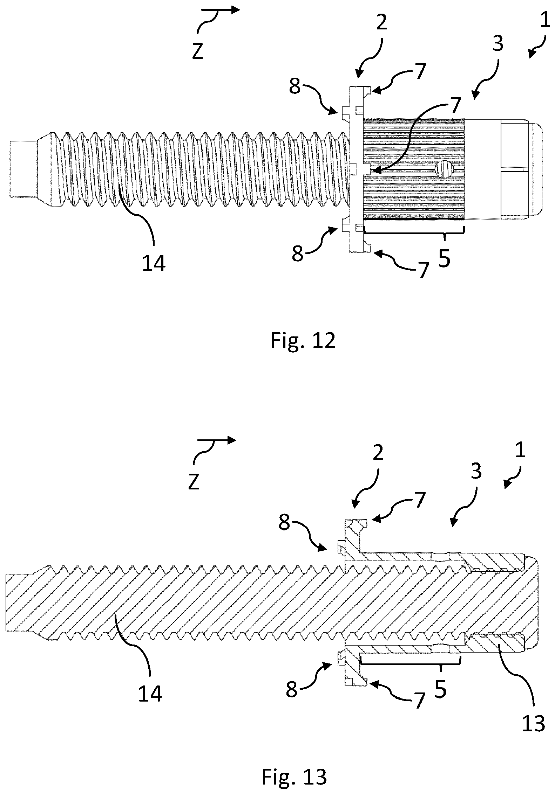

Die in den Fig. 12 und 13 dargestellte Ausführungsform des Blindnietelements 1 unterscheidet sich von den vorigen Ausführungsformen des Blindnietelements 1 im Wesentlichen dadurch, dass der Schaft 3 einen Verbindungsabschnitt 13 für einen Gewindebolzen 14 aufweist, wobei der Gewindebolzen 14 vorliegend mit dem Blindnietelement 1 im Bereich des Verbindungsabschnitts 13 verbunden ist. Der Verformungsabschnitt 5 ist vorliegend zwischen dem Verbindungsabschnitt 13 für den Gewindebolzen 14 und den Kopfabschnitt 2 ausgebildet.

### Bezugszeichenliste

- 1: Blindnietelement
- 2: Kopfabschnitt
- 3: Schaft
- 4: Innengewinde
- 5: Verformungsabschnitt
- 6: Schließkopf
- 7: erster Vorsprung
- 8: zweiter Vorsprung
- 9: Schneidkante
- 10: erste Schneidfläche
- 11: zweite Schneidfläche
- 12: Aussparung
- 13: Verbindungsabschnitt
- 14: Gewindebolzen
- 15: radial äußerer Bereich
- 16: radial innerer Bereich
- 17: Loch
- 18: Rücksprung
- 19: erstes Bauteil
- 20: zweites Bauteil

- Z: axiale Richtung

## Patentansprüche

1. Blindnietelement (1), wobei das Blindnietelement (1) einen Kopfabschnitt (2) und einen in einer axialen Richtung (Z) an den Kopfabschnitt (2) angrenzenden Schaft (3) aufweist, wobei der Schaft (3) ein Innengewinde (4) oder einen Verbindungsabschnitt (13) für einen Gewindebolzen (14) und zwischen dem Innengewinde (4) bzw. dem Verbindungsabschnitt (13) für den Gewindebolzen (14) und dem Kopfabschnitt (2) einen Verformungsabschnitt (5) aufweist, zur Ausbildung eines Schließkopfes (6) bei einem Verformen des Verformungsabschnitts (5), wobei der Kopfabschnitt (2) einen radial äußeren Bereich (15) aufweist, wobei der radial äußere Bereich (15) in einer radialen Richtung beabstandet vom Schaft (3) ausgebildet ist, wobei der Kopfabschnitt (2) zumindest einen in der axialen Richtung (Z) hervorstehenden ersten Vorsprung (7) aufweist, wobei der zumindest eine erste Vorsprung (7) ausschließlich in dem radial äußeren Bereich (15) des Kopfabschnitts (2) ausgebildet ist, und/oder wobei der Kopfabschnitt (2) zumindest einen entgegen der axialen Richtung (Z) hervorstehenden zweiten Vorsprung (8) aufweist, wobei der zumindest eine zweite Vorsprung (8) ausschließlich in dem radial äußeren Bereich (15) des Kopfabschnitts (2) ausgebildet ist, **dadurch gekennzeichnet, dass** in einer Projektion in der axialen Richtung (Z) der Kopfabschnitt (2) angrenzend an den zumindest einen ersten Vorsprung (7) eine Aussparung (12) aufweist und/oder angrenzend an den zumindest einen zweiten Vorsprung (8) eine Aussparung (12) aufweist.

2. Blindnietelement nach Anspruch 1, wobei ein radialer Abstand zwischen dem jeweiligen Vorsprung (7, 8) und dem Schaft (3) zumindest 50% eines radialen Abstands einer Außenkante des Kopfabschnitts (2) und des Schafts (3) beträgt.

3. Blindnietelement nach Anspruch 2, wobei ein radialer Abstand zwischen dem jeweiligen Vorsprung (7, 8) und dem Schaft (3) zumindest 60% des radialen Abstands einer Außenkante des Kopfabschnitts (2) und des Schafts (3) beträgt

4. Blindnietelement nach einem der Ansprüche 1 bis 3, wobei der zumindest eine erste Vorsprung (7) und/oder der zumindest eine zweite Vorsprung (8) an der Außenkante des Kopfabschnitts (2) ausgebildet ist.

5. Blindnietelement nach einem der Ansprüche 1 bis 4, wobei in einer Blickrichtung in der axialen Richtung (Z) die jeweilige Aussparung (12) im Uhrzeigersinn an den zumindest einen ersten Vorsprung (7) angrenzt und/oder die jeweilige Aussparung (12) in einer Blickrichtung in der axialen Richtung (Z) im Uhrzeigersinn an den zumindest einen zweiten Vorsprung (8) angrenzt.

6. Blindnietelement nach einem der Ansprüche 1 bis 5, wobei in einer Blickrichtung in der axialen Richtung (Z) entgegen dem Uhrzeigersinn angrenzend an den zumindest einen ersten Vorsprung (7) der Kopfabschnitt (2) frei von einer Aussparung ist und/oder in einer Blickrichtung in der axialen Richtung (Z) entgegen dem Uhrzeigersinn angrenzend an den zumindest einen zweiten Vorsprung (8) der Kopfabschnitt (2) frei von einer Aussparung ist.

7. Blindnietelement nach einem der Ansprüche 1 bis 6, wobei in einer Blickrichtung in der axialen Richtung (Z) die jeweilige Aussparung (12) entgegen dem Uhrzeigersinn an den zumindest einen ersten Vorsprung (7) angrenzt und/oder die jeweilige Aussparung (12) in einer Blickrichtung in der axialen Richtung (Z) entgegen dem Uhrzeigersinn an den zumindest einen zweiten Vorsprung (8) angrenzt.

8. Blindnietelement nach Anspruch 7, wobei in einer Blickrichtung in der axialen Richtung (Z) im Uhrzeigersinn angrenzend an den zumindest einen ersten Vorsprung (7) der Kopfabschnitt (2) frei von einer Aussparung ist und/oder in einer Blickrichtung in der axialen Richtung (Z) im Uhrzeigersinn angrenzend an den zumindest einen zweiten Vorsprung (8) der Kopfabschnitt (2) frei von einer Aussparung ist.

9. Blindnietelement nach einem der vorigen Ansprüche, wobei der zumindest eine erste Vorsprung (7) und/oder der zumindest eine zweite Vorsprung (8) durch eine lokale Umformung eines Bereichs des Kopfabschnitts (4), insbesondere durch Prägen oder Umbiegen des Bereichs gebildet ist.

10. Blindnietelement nach einem der vorigen Ansprüche, wobei der zumindest eine erste Vorsprung (7) und/oder der zumindest eine zweite Vorsprung (8) eine (vorstehende) Schneidkante (9) und/oder eine (vorstehende) Spitze aufweist.

11. Blindnietelement nach Anspruch 10, wobei die Schneidkante (9) sich im Wesentlichen in radialer Richtung erstreckt.

12. Blindnietelement nach Anspruch 10 oder 11, wobei der zumindest eine erste Vorsprung (7) und/oder der zumindest eine zweite Vorsprung (8) eine erste Schneidfläche (10) und eine zu der ersten Schneidefläche (10) geneigte zweite Schneidfläche (11) aufweist, wobei eine Kontaktlinie der Schneidflächen (10, 11) die Schneidkante (9) des Vorsprungs (7, 8) bildet.

13. Blindnietelement nach Anspruch 12, wobei die erste Schneidfläche (10) mit einer senkrecht zu der axialen Richtung (Z) ausgebildeten Ebene einen ersten Winkel (α) einschließt und die zweite Schneidfläche (11) mit dieser Ebene einen zweiten Winkel (β) einschließt, wobei der Betrag des zweiten Winkels (β) kleiner ist als der Betrag des ersten Winkels (α), vorzugsweise die zweite Schneidfläche (11) der Aussparung (12) zugewandt ist.

14. Blindnietelement nach einem der vorigen Ansprüche, wobei das Blindnietelement (1) mehrere erste Vorsprünge (7) und/oder mehrere zweite Vorsprünge (8) aufweist, wobei eine Gesamtheit der mehreren ersten Vorsprünge (7) und/oder eine Gesamtheit der mehreren zweite Vorsprünge (8) um eine in axialer Richtung (Z) ausgebildete Achse umlaufend ausgebildet sind, vorzugsweise das Blindnietelement (1) mehrere erste Vorsprünge (7) und mehrere zweite Vorsprünge (8) aufweist, wobei die mehreren ersten Vorsprünge (7) und die mehrere zweite Vorsprünge (8) in Umlaufrichtung alternierend ausgebildet sind.

15. Blindnietelement nach einem der vorigen Ansprüche, wobei der Kopfabschnitt (2) im Bereich des ersten Vorsprungs (7) und/oder im Bereich des zweiten Vorsprungs (8) eine größere Erstreckung in der axialen Richtung (Z) aufweist als in angrenzenden Bereichen des Kopfabschnitts (4).

## Claims

1. Blind rivet element (1), wherein the blind rivet element (1) has a head portion (2) and a shank (3) adjacent to the head portion (2) in an axial direction (Z), wherein the shank (3) has an internal thread (4) or a connecting portion (13) for a threaded bolt (14), and a deformation portion (5) between the internal thread (4) or the connecting portion (13) for the threaded bolt (14) and the head portion (2), for forming a closing head (6) when the deformation portion (5) is deformed, wherein the head portion (2) has a radially outer region (15), wherein the radially outer region (15) is formed spaced apart from the shank (3) in a radial direction, wherein the head portion (2) has at least one first protrusion (7) protruding in the axial direction (Z), wherein the at least one first protrusion (7) is formed exclusively in the radially outer region (15) of the head portion (2), and/or wherein the head portion (2) has at least one second protrusion (8) protruding counter to the axial direction (Z), wherein the at least one second protrusion (8) is formed exclusively in the radially outer region (15) of the head portion (2), **characterized in that**, in a projection in the axial direction (Z), the head portion (2) has a recess (12) adjacent to the at least one first protrusion (7) and/or has a recess (12) adjacent to the at least one second protrusion (8).

2. Blind rivet element according to Claim 1, wherein a radial distance between the respective protrusion (7, 8) and the shank (3) is at least 50% of a radial distance between an outer edge of the head portion (2) and the shank (3).

3. Blind rivet element according to Claim 2, wherein a radial distance between the respective protrusion (7, 8) and the shank (3) is at least 60% of the radial distance between an outer edge of the head portion (2) and the shank (3).

4. Blind rivet element according to one of Claims 1 to 3, wherein the at least one first protrusion (7) and/or the at least one second protrusion (8) are/is formed on the outer edge of the head portion (2).

5. Blind rivet element according to one of Claims 1 to 4, wherein the respective recess (12) is adjacent in the clockwise direction to the at least one first protrusion (7) in a viewing direction in the axial direction (Z), and/or the respective recess (12) is adjacent in the clockwise direction to the at least one second protrusion (8) in a viewing direction in the axial direction (Z).

6. Blind rivet element according to one of Claims 1 to 5, wherein the head portion (2) is free from a recess adjacent anticlockwise to the at least one first protrusion (7) in a viewing direction in the axial direction (Z), and/or the head portion (2) is free from a recess adjacent anticlockwise to the at least one second protrusion (8) in a viewing direction in the axial direction (Z).

7. Blind rivet element according to one of Claims 1 to 6, wherein the respective recess (12) is adjacent anticlockwise to the at least one first protrusion (7) in a viewing direction in the axial direction (Z), and/or the respective recess (12) is adjacent anticlockwise to the at least one second protrusion (8) in a viewing direction in the axial direction (Z) .

8. Blind rivet element according to Claim 7, wherein the head portion (2) is free from a recess adjacent in the clockwise direction to the at least one first protrusion (7) in a viewing direction in the axial direction (Z), and/or the head portion (2) is free from a recess adjacent in the clockwise direction to the at least one second protrusion (8) in a viewing direction in the axial direction (Z).

9. Blind rivet element according to one of the preceding claims, wherein the at least one first protrusion (7) and/or the at least one second protrusion (8) are/is formed by local deformation of a region of the head portion (4), in particular by stamping or bending over the region.

10. Blind rivet element according to one of the preceding claims, wherein the at least one first protrusion (7) and/or the at least one second protrusion (8) have/has a (protruding) cutting edge (9) and/or a (protruding) point.

11. Blind rivet element according to Claim 10, wherein the cutting edge (9) extends substantially in the radial direction.

12. Blind rivet element according to Claim 10 or 11, wherein the at least one first protrusion (7) and/or the at least one second protrusion (8) have/has a first cutting face (10) and a second cutting face (11) which is inclined with respect to the first cutting face (10), wherein a contact line of the cutting faces (10, 11) forms the cutting edge (9) of the protrusion (7, 8).

13. Blind rivet element according to Claim 12, wherein the first cutting face (10) encloses a first angle (α) with a plane formed perpendicularly to the axial direction (Z) and the second cutting face (11) encloses a second angle (β) with said plane, wherein the value of the second angle (β) is smaller than the value of the first angle (α), preferably the second cutting face (11) faces the recess (12).

14. Blind rivet element according to one of the preceding claims, wherein the blind rivet element (1) has a plurality of first protrusions (7) and/or a plurality of second protrusions (8), wherein an entirety of the plurality of first protrusions (7) and/or an entirety of the plurality of second protrusions (8) are/is formed in an encircling manner about an axis formed in the axial direction (Z), preferably the blind rivet element (1) has a plurality of first protrusions (7) and a plurality of second protrusions (8), wherein the plurality of first protrusions (7) and the plurality of second protrusions (8) are formed in an alternating manner in the encircling direction.

15. Blind rivet element according to one of the preceding claims, wherein the head portion (2) has a greater extent in the axial direction (Z) in the region of the first protrusion (7) and/or in the region of the second protrusion (8) than in adjacent regions of the head portion (4).

## Revendications

1. Élément rivet aveugle (1), l'élément rivet aveugle (1) présentant une partie tête (2) et une tige (3) adjacente à la partie tête (2) dans une direction axiale (Z), la tige (3) présentant un filetage intérieur (4) ou une partie de raccordement (13) pour un boulon fileté (14) et, entre le filetage intérieur (4) ou la partie de raccordement (13) pour le boulon fileté (14) et la partie tête (2), une partie de déformation (5) pour la réalisation d'une tête de fermeture (6) lors d'une déformation de la partie de raccordement (5), la partie tête (2) présentant une région (15) radialement extérieure, la région (15) radialement extérieure étant réalisée de manière espacée de la tige (3) dans une direction radiale, la partie tête (2) présentant au moins une première saillie (7) faisant saillie dans la direction axiale (Z), l'au moins une première saillie (7) étant réalisée exclusivement dans la région (15) radialement extérieure de la partie tête (2), et/ou la partie tête (2) présentant au moins une deuxième saillie (8) faisant saillie en sens inverse de la direction axiale (Z), l'au moins une deuxième saillie (8) étant réalisée exclusivement dans la région (15) radialement extérieure de la partie tête (2), **caractérisé en ce que**, dans une projection dans la direction axiale (Z), la partie tête (2) présente un évidement (12) de manière adjacente à l'au moins une première saillie (7) et/ou présente un évidement (12) de manière adjacente à l'au moins une deuxième saillie (8).

2. Élément rivet aveugle selon la revendication 1, une distance radiale entre la saillie (7, 8) respective et la tige (3) valant au moins 50% d'une distance radiale entre une arête extérieure de la partie tête (2) et la tige (3).

3. Élément rivet aveugle selon la revendication 2, une distance radiale entre la saillie (7, 8) respective et la tige (3) valant au moins 60% de la distance radiale entre une arête extérieure de la partie tête (2) et la tige (3).

4. Élément rivet aveugle selon l'une des revendications 1 à 3, l'au moins une première saillie (7) et/ou l'au moins une deuxième saillie (8) étant réalisée(s) sur l'arête extérieure de la partie tête (2).

5. Élément rivet aveugle selon l'une des revendications 1 à 4, l'évidement (12) respectif étant adjacent à l'au moins une première saillie (7) dans le sens des aiguilles d'une montre dans une direction de visée dans la direction axiale (Z) et/ou l'évidement (12) respectif étant adjacent à l'au moins une deuxième saillie (8) dans le sens des aiguilles d'une montre dans une direction de visée dans la direction axiale (Z).

6. Élément rivet aveugle selon l'une des revendications 1 à 5, la partie tête (2) étant dépourvue d'un évidement de manière adjacente à l'au moins une première saillie (7) dans le sens inverse des aiguilles d'une montre dans une direction de visée dans la direction axiale (Z) et/ou la partie tête (2) étant dépourvue d'un évidement de manière adjacente à l'au moins une deuxième saillie (8) dans le sens inverse des aiguilles d'une montre dans une direction de visée dans la direction axiale (Z).

7. Élément rivet aveugle selon l'une des revendications 1 à 6, l'évidement (12) respectif étant adjacent à l'au moins une première saillie (7) dans le sens inverse des aiguilles d'une montre dans une direction de visée dans la direction axiale (Z) et/ou l'évidement (12) respectif étant adjacent à l'au moins une deuxième saillie (8) dans le sens inverse des aiguilles d'une montre dans une direction de visée dans la direction axiale (Z).

8. Élément rivet aveugle selon la revendication 7, la partie tête (2) étant dépourvue d'un évidement de manière adjacente à l'au moins une première saillie (7) dans le sens des aiguilles d'une montre dans une direction de visée dans la direction axiale (Z) et/ou la partie tête (2) étant dépourvue d'un évidement de manière adjacente à l'au moins une deuxième saillie (8) dans le sens des aiguilles d'une montre dans une direction de visée dans la direction axiale (Z).

9. Élément rivet aveugle selon l'une des revendications précédentes, l'au moins une première saillie (7) et/ou l'au moins une deuxième saillie (8) étant formée(s) par une déformation locale d'une région de la partie tête (4), en particulier par estampage ou pliage de la région.

10. Élément rivet aveugle selon l'une des revendications précédentes, l'au moins une première saillie (7) et/ou l'au moins une deuxième saillie (8) présentant une arête de coupe (saillante) (9) et/ou une pointe (saillante).

11. Élément rivet aveugle selon la revendication 10, l'arête de coupe (9) s'étendant sensiblement dans la direction radiale.

12. Élément rivet aveugle selon la revendication 10 ou 11, l'au moins une première saillie (7) et/ou l'au moins une deuxième saillie (8) présentant une première surface de coupe (10) et une deuxième surface de coupe (11) inclinée par rapport à la première surface de coupe (10), une ligne de contact des surfaces de coupe (10, 11) formant l'arête de coupe (9) de la saillie (7, 8).

13. Élément rivet aveugle selon la revendication 12, la première surface de coupe (10) formant, avec un plan réalisé perpendiculairement à la direction axiale (Z), un premier angle (α) et la deuxième surface de coupe (11) formant avec ce plan un deuxième angle (β), la valeur du deuxième angle (β) étant inférieure à la valeur du premier angle (α), de préférence la deuxième surface de coupe (11) étant tournée vers l'évidement (12).

14. Élément rivet aveugle selon l'une des revendications précédentes, l'élément rivet aveugle (1) présentant plusieurs premières saillies (7) et/ou plusieurs deuxièmes saillies (8), la totalité des plusieurs premières saillies (7) et/ou la totalité des plusieurs deuxièmes saillies (8) étant réalisées de manière périphérique autour d'un axe réalisé dans la direction axiale (Z), de préférence l'élément rivet aveugle (1) présentant plusieurs premières saillies (7) et plusieurs deuxièmes saillies (8), les plusieurs premières saillies (7) et les plusieurs deuxièmes saillies (8) étant réalisées en alternance dans la direction périphérique.

15. Élément rivet aveugle selon l'une des revendications précédentes, la partie tête (2) présentant, dans la région de la première saillie (7) et/ou dans la région de la deuxième saillie (8), une plus grande étendue dans la direction axiale (Z) que dans des régions adjacentes de la partie tête (4).
